# EUROPEAN PATENT SPECIFICATION

(11) **EP 1 945 041 B1**
(45) Date of publication and mention of the grant of the patent: **05.01.2011**
(21) Application number: 05813718.3
(22) Date of filing: 07.11.2005
(51) Int. Cl.: A23G 3/44, A23G 3/40, A23G 3/00

(54) **CHEWY SWEET AND METHOD FOR PREPARING SUCH A CHEWY SWEET**
KAUBARE SÜSSWARE UND VERFAHREN ZUR HERSTELLUNG SOLCH EINER KAUBAREN SÜSSWARE
BONBON TENDRE ET PROCÉDÉ SERVANT À PRÉPARER UN TEL BONBON TENDRE

(43) Date of publication of application: 23.07.2008
(73) Proprietor: SYRAL Belgium NV, 9300 Aalst (BE)
(72) Inventor: CLAESSENS, Marianne, B-9300 Aalst (BE)
(74) Representative: Ostyn, Frans
(86) International application number: PCT/EP2005/011966
(87) International publication number: WO 2007/051485

(56) References cited:
- EP-A- 0 824 870
- EP-A- 0 979 611
- WO-A-2005/063049
- FR-A- 2 759 288
- US-A- 3 030 211
- US-B1- 6 803 061

## Description

On the one hand, the invention relates to a chewy sweet, comprising a gelatinizing agent for providing a chewy texture to the chewy sweet. On the other hand, the invention relates to a method for preparing such a chewy sweet.

Typical sugar-based or sugar-free chewy sweets, also called chewy candy or fruit chews, available in the prior art contain some gelatine in order to provide a desirable chewy texture in these compositions. Apart from the sugar-based or sugar-free mass ingredients, these products are also characterised by the presence of a relatively important quantity of fat, present as an "oil in water"-emulsion in saturated sugar-based or sugar-free syrup. This fat may be of animal or vegetable origin and represents between 3 to 10 % by weight of the total mass of the chewy sweet. The gelatine content in such compositions typically varies between 0,2 and 5 % w/w, more typically between 0,2 and 3 % w/w (weight of the chewy sweet composition). The gelatine type used is a low Bloom type gelatine (70 - 180 Bloom; the "Bloom-index" being an expression of the colloidal form in order to resist to pressure and shear forces).

Already since a long time, one is searching for gelatine replacers. Preferably, such a replacer is to be made from easily accessible vegetable material having all the essential characteristics of gelatine. The interest in this search has lately increased since the outbreak of the BSE-disease ("bovine spongiform encephalopathy"- or "mad-cow"-disease). Bovine skin and bones form a major source of collagen used for gelatine production.

Within this framework, gelatine replacement in chewy sweets has already been the subject of a number of patent applications and publications.

In EP 979611, gelatine is replaced by a combination of wheat gluten and maltodextrin. Thereby the wheat gluten is added in an amount of between 0,5 and 10% (w/w), preferably between 0,5 and 5% (w/w). The maltodextrin Is used in an amount of between 0,5 and 15% (w/w), preferably between 0,5 and 5% (w/w). Wheat gluten is herein defined as vital wheat gluten, fractions of vital wheat gluten, modified wheat gluten, (partially) hydrolysed wheat gluten and/or mixtures thereof. The maltodextrin used has a DE (dextrose equivalent) from 0,1 to 20 DE, preferably between 4 and 10 DE, and more preferably a DE of 5, and it may be obtained from any available starch source. Thereby, one single product, gelatine, is replaced by a combination of products, whereby the maltodextrin is cooked-up with the sugar-based mass while the wheat gluten is dispersed in water at 60°C and incorporated into the mass just before or during pulling of the mass. As shown in the accompanying example, one part of gelatine must thereby be replaced by one part of wheat gluten (preferably a partially hydrolysed wheat gluten) and two parts of maltodextrin in order to obtain a comparable structure.

In EP1023841, the gelatine is replaced by an oxidised starch or more preferably by a combination of oxidised starch and gum arabic. The oxidised starch content of the chewy sweet product thereby may vary between 0,5 and 20% (w/w) but is situated preferably between 5 and 10% (w/w). In addition, the oxidised starch is combined with gum arabic, which is preferably used in a quantity of 1 to 8% (w/w). The examples of this application show that gelatine is replaced by an amount of oxidised starch and gum arabic. This amount is substantially higher than the quantity of gelatine normally used. Normally not more than 2-3% (w/w) low Bloom gelatine is used to prepare the corresponding chewy sweets.
An additional disadvantage of the use of gum arabic is that the quality may vary from year till year, through which the formulations have to be adapted each year. Furthermore, this is a complicated and expensive solution for replacing the gelatine in chewy sweets.

The use of specialty starches in gelatine-free chewy sweets is also mentioned by P. Hendrikx in "Innovation in Food Technology", 2002, 16, p. 102-103.

In view of the above, the problem of the invention is that there is still a need for further improvement whereby the gelatine is replaced by one single product.

This problem of the invention is on the one hand solved by providing a chewy candy or fruit chew, in the form of
i. a sugar-based chewy candy or fruit chew having a bulk mass being composed of a combination of two or more ingredients selected among glucose syrups, invert syrups, fructose syrups, and sucrose, dextrose or fructose, or
ii. a sugar-free chewy candy or fruit chew having a bulk mass being composed of a combination of two or more ingredients selected among hydrogenated starch hydrolysates, sorbitol, maltitol, Isomaltitol, xylitol, lactitol, erythritol, mannitol, trehalose, tagatose and polydextrose;
comprising a gelatinizing agent for providing a chewy texture to the chewy candy or fruit chew, in which the gelatinizing agent consists of a gliadin-enriched wheat gluten fraction having a gliadin content of at least 50 % on dry basis, and the chewy candy or fruit chew comprises a fat fraction which represents between 3 and 10 % of the weight of the chewy candy or fruit chew.

In a preferred embodiment the fat material may be selected among animal and/or vegetable fats. In the case of a vegetable fat, hydrogenated palm kern oil and/or hydrogenated coconut oil is used.

US-A-3 030 211 discloses the foaming characteristics of deamidized gliadin. Example IV of D3 describes a comparative example of a divinity candy prepared with deamidized gliadin (A) and unmodified gliadin (B). The use of unmodified gliadin results in a heavy and fondant-like candy instead of a light fluffy meringue-type one. No fat fraction is added to the divinity candy however.

Wheat gluten is defined as the fraction that remains after washing out starch from wheat flour.

In this way, the gelatine of the original formulation is replaced by a single product.

Such a gliadin-enriched wheat gluten fraction can be obtained by different processes, for instance as disclosed in
- BE1014340, wherein a method is described for the preparation of gliadin- and glutenin-rich fractions from gluten in an aqueous medium and in the presence of an acid, wherein the gluten are dispersed continuously or not in water up to a dry substance varying between 5 and 30 %, by which
   ○ the pH of the dispersion is monitored between 4,4 and 4,8, and
   ○ the gluten-water mixture is submitted to shearing actions, through which the dispersion, continuously or not, can be fractionated in gliadin- and glutenin-rich fractions, by which a single gliadin-enriched fraction with a gliadin/glutenin ratio of at least 2,5 is obtained, and a single glutenin-rich fraction with a giladin/glutenin ratio of less than 0,8 is obtained.
- EP 0685164, wherein a method is described for preparing a gliadin-enriched fraction by extracting wheat gluten with an aqueous solution of ethanol having a concentration of 30 % by volume or below and fractionating the supernatant obtained by the extraction by addition of water, drying, pH adjustment, or other means. The above extraction can be conducted with, e.g. an aqueous solution of ethanol having a concentration of 30 to 70 % by volume, an aqueous solution of isopropyl alcohol or n-propanol having a concentration of 10 to 20 % by volume, or an aqueous solution of acetone having a concentration of 20 to 50 % by volume to give a fraction having a gliadin concentration of as high as 80 % or above, and the extraction can also be conducted with an acidic aqueous solution of ethanol having a concentration of 5 to 20 % by volume and a pH of 3,5 to 5,5 to give a gliadin fraction having a concentration of as medium as 50 % or above, though the extractant is not limited to them. The gliadin concentration of the fraction can be controlled by varying the composition of the extractant and/or the extraction conditions. The gliadin-rich fraction to be used in the present invention is preferably any containing gliadin in an amount of 50 % or above on dry basis.

In a preferred embodiment of a chewy sweet according to the invention, the chewy sweet comprises between 0,2 and 5 % w/w of a gliadin-enriched wheat gluten fraction.

In a more preferred embodiment of a chewy sweet according to the invention, the chewy sweet comprises between 0,5 and 3 % w/w of a gliadin-enriched wheat gluten fraction.

In a still more preferred embodiment of a chewy sweet according to the invention, the chewy sweet comprises between 0,5 and 2 % w/w of a gliadin-enriched wheat gluten fraction.

These w/w percentages of gliadin-enriched wheat gluten fractions with relation to the total weight of the chewy sweet have the advantage that the chewy sweet comprises a gliadin-enriched wheat gluten fraction in a concentration which is comparable to the gelatine concentration used in the original formulation.

This gliadin/glutenin ratio is determined by the method disclosed in BE1014340. This method uses the different solubility characteristics of the wheat protein classes in different solvents to separate gliadins, glutenins, albumins and globulins. Distribution of protein in the different solvents is quantified by Kjeldahl analysis.

### - Equipment:

- polypropylene centrifuge tubes of 40 ml
- centrifuge (able to spin at 15000 g)
- analytical balance
- 0,5 M NaCl
- 1,5 % SDS solution
- 95 % ethanol
- incubation chamber at 10 °C
- Kjeldahl apparatus
- Kjeldahl tablets

### - Method:

All extractions are for 30 minutes at room temperature.
- Weigh a sample in a PP-centrifuge tube of ± 40 ml. For flour 2 g, for gluten 200 mg, for process samples the amount corresponding to ± 150 - 160 mg of protein.
- Add 20 ml 0,5 M NaCl. Stir for 30 minutes at room temperature (RT).
   After extraction, centrifuge at 500 g for 15 minutes at RT. Carefully decant the supernatant in a clean PP-tube. Add another 20 ml of 0,5 M NaCl to the residue (precipitate A) and repeat the extraction and centrifugation. Combine this second supernatant with the first and then centrifuge at 15000 g for 15 minutes at RT. The supernatant contains the albumins and globulins.
- To the residue (precipitate B) is added 6 ml 1,5 % SDS solution. The mixture is homogenised and combined with precipitate A. Extraction is for 30 minutes at RT. 14 ml of absolute ethanol Is then added drop wise and the mixture is stirred for another 30 minutes at RT. After centrifugation at RT for 15 minutes at 500 g, a precipitate and supernatant 3 are obtained. This complete procedure is repeated on the obtained precipitate, yielding precipitate C and supernatant 4.
- Supernatants 3 and 4 are combined in a small beaker and kept in an incubation chamber at 10 °C for 60 minutes. A fine precipitate forms and this mixture is then poured into the centrifuge tube containing precipitate C. The mixture is immediately transferred to the centrifuge and spun at 15000 g for 15 minutes at 10 °C. This yields a supernatant containing gliadins and a precipitate containing glutenins.

### - Kjeldahl determination:

The solutions containing the albumins/globulins and gliadins (± 40 ml) are quantitatively transferred to destruction flasks (750 ml). A tablet, 14 ml of concentrated sulphuric acid and 3 drops of octanol (antifoam) are added and samples are destroyed during 90 minutes (until clear). The concentrate (about 15 ml) are transferred to a Kjeldahl tube and nitrogen is determined by the standard Kjeldahl method. The glutenin fraction is freeze dried and nitrogen content is determined as in dry products.

The results are reported as the amount of protein found in the different classes and expressed as a percentage of the recovered protein.

Further minor ingredients are one or more
- emulsifiers such as lecithin and/or glycerol mono-stearate;
- flavouring agents;
- colouring agents; and
- food acids.

The chewy sweet according to the invention, can on the one hand be a sugar-based chewy sweet, and on the other hand be a sugar-free chewy sweet.

When referring to sugar-based chewy sweets, it is meant that the bulk mass of these compositions is composed of a combination of two or more ingredients selected among glucose syrups, invert syrups, fructose syrups, and (crystalline) sucrose, dextrose or fructose. The glucose and fructose syrups are thereby obtained via the acid and/or enzymatic conversion of starch into the respective compositions. Fructose syrups can also be obtained via the hydrolysis of fructose-containing polymers, such as inulin.

In the case that the bulk mass of the chewy sweets is sugar-free, then suitable combinations of hydrogenated starch hydrolysates, sorbitol, maltitol, xylitol, isomaltitol (Palatinit), lactitol, erythritol, mannitol, trehalose, tagatose and polydextrose can be used. If necessary, sweetness can be controlled by adding high intensity sweeteners such as a.o. aspartame, sucralose, acesulfame K, saccharine, cyclamate, neotame, alitame, stevioside or mixtures thereof. In the sugar-based chewy sweets a part of the sugar-based bulk material (<50%) can be replaced by sugar-free ingredients.

The problem of the invention is on the other hand solved by providing a method for preparing the chewy sweets of the invention, comprising the steps of:
a) dispersing the gliadin-enriched wheat gluten fraction in warm water,
b) cooking up glucose syrup, sucrose and water at 120-140°C, until moisture content of the mass is <10%, preferably between 4 and 7%,
c) adding fat and emulsifiers to the cooked-up syrup, during or after cooking,
d) cooling the mixture of b) and c) to below 105°C,
e) mixing the syrup of d) with a) and the other ingredients,
f) further cooling this mass,
g) and bringing the cooled mass into the desired shape.

The cooling step f) typically comprises pouring this mass on a cooling table where the mass is tempered by folding. During folding, some fondant or icing sugar can be added.

This tempered mass is then further "pulled" until the final texture is obtained. During "pulling" air is incorporated into the mass, thereby providing a product having a density of between 1 and 1.2. After some additional cooling the mass is formed into pieces and wrapped. The obtained chewy candy has a similar texture profile and similar mouth feel as the standard type with gelatine.

This invention will now be illustrated by the following examples which should be considered as being not limiting to the scope of the invention as such and as expressed in the following claims.

### Example 1:

A reference example as well as a composition according to the invention is prepared. The recipe for the chewy sweets is given in table 1.

**Table 1: chewy sweets ingredients**

| | Weight ingredients in g (as is) | D.S. (dry substance) (g) | D.S. of ingredients (%) |
|---|---|---|---|
| Glucose syrup 42 DE | 474 | 376 | 79,4 |
| Sucrose | 545 | 545 | 100 |
| Water | 100 | | |
| Fat | 60 | 60 | 100 |
| Lecithin | 3 | 3 | 100 |
| Gelatine 110 Bloom (reference) | 8 | 7 | 86 |
| Gliadin-enriched wheat gluten fraction (example 1) | 8 | 7 | 86 |
| Water | 13 | | |
| Citric acid (50% solution) | 18 | 9 | 50 |
| Colour: yellow | | | |
| Flavour: pineapple | | | |
| TOTAL | 1220 | 1000 | |

The chewy sweets are prepared using the following procedure:
- mix gelatine (reference) or gliadin-enriched wheat gluten fraction (as gelatinizing agent) (example 1) and water and store mixture at 60°C,
- cook-up glucose syrup, sugar, fat, lecithin and water at 123°C until dry substance of the mass is about 96%,
- cool down the mass till 90°C,
- add the gelatine solution (or gliadin suspension) together with colour, flavour and acid, and mix into the syrup,
- cool the mass on a cooling table until 40°C,
- add fondant or icing sugar, and pull on the pulling machine for 3 minutes,
- cool down below 25°C, on a second cooling table, and
- form and wrap the chewy sweets.

The two chewy sweets, i.e. the reference and the chewy sweet of example 1, were evaluated by an internal taste panel, in a triangular test (as described in ISO 4120-1983 (E)) with 24 panellists. The triangle test is a test method which covers a procedure for determining whether a perceptible sensory difference exists between samples of two products. The result of the triangular test was that no statistically significant difference was found between the two samples.

### Example 2:

A sugar-free chewy sweet Is prepared using the same procedure as In example 1. The recipe for the sugar-free chewy sweets is given in table 2.

**Table 2: Sugar-free chewy sweets ingredients**

| | Weight ingredients (as is) in g | D.S. of ingredients (%) |
|---|---|---|
| Polydextrose (Sta-Lite III) | 136 | 96 |
| Hydrogenated starch hydrolysate (Meritol 250) | 483 | 76 |
| lsomalt GS | 292 | 100 |
| Gelatine 110 Bloom (reference) | 21 | 35 |
| Gliadin-enriched wheat gluten fraction (Example 2) | 21 | 35 |
| Lecithin | 3 | 100 |
| Coconut fat | 70 | 100 |
| Citric acid | 18 | 50 |
| Water | 50 | |
| Colour and flavour | | |
| TOTAL | 1230 | |

The sugar-free chewy sweets are prepared using the following procedure:
- mix gelatine (reference) or gliadin-enriched wheat gluten fraction (as gelatinizing agent) (example 2) and water and store mixture at 60°C,
- cook-up hydrogenated glucose syrup, isomalt, polydextrose, fat, lecithin and water at 123°C until dry substance of the mass is about 96%,
- cool down the mass till 90°C,
- add the gelatine solution (or gliadin suspension) together with colour, flavour and acid, and mix into the syrup,
- cool the mass on a cooling table until 40°C,
- add lsomalt (2,5% on total mass) as icing sugar, and pull on the pulling machine for 3 minutes,
- cool down below 25°C, on a second cooling table, and
- form and wrap the chewy sweets.

### Example 3:

In this example a composition containing 2,7% giladin-enriched fraction was prepared using the procedure of example 1. The recipe for the chewy sweets is given in table 3.

**Table 3: chewy sweets ingredients**

| | Weight ingredients in g (as is) | D.S. (g) | D.S. of ingredients (%) |
|---|---|---|---|
| Glucose syrup 42 DE | 474 | 376 | 79,4 |
| Sucrose | 525 | 525 | 100 |
| Water | 100 | | |
| Fat | 60 | 60 | 100 |
| Lecithin | 3 | 3 | 100 |
| Gliadin-enriched fraction | 30 | 27 | 90 |
| water | 60 | | |
| Citric acid (50% solution) | 18 | 9 | 50 |
| Colour: yellow | | | |
| Flavour: pineapple | | | |
| TOTAL | 1270 | 1000 | |

The chewy sweets are prepared using the following procedure:
- mix gliadin-enriched wheat gluten fraction and water and store mixture at 60°C,
- cook-up glucose syrup, sugar, fat, lecithin and water at 123°C until dry substance of the mass is about 96%,
- cool down the mass till 90°C,
- add the gliadin suspension together with colour, flavour and acid, and mix into the syrup,
- cool the mass on a cooling table until 40°C,
- add fondant or icing sugar, and pull on the pulling machine for 3 minutes,
- cool down below 25°C, on a second cooling table, and
- form and wrap the chewy sweets.

## Claims

1. Chewy candy or fruit chew, in the form of
- a sugar-based chewy candy or fruit chew having a bulk mass being composed of a combination of two or more ingredients selected among glucose syrups, invert syrups, fructose syrups, and sucrose, dextrose or fructose, or
- a sugar-free chewy candy or fruit chew having a bulk mass being composed of a combination of two or more ingredients selected among hydrogenated starch hydrolysates, sorbitol, maltitol, isomaltitol, xylitol, lactitol, erythritol, mannitol, trehalose, tagatose and polydextrose;
comprising a gelatinizing agent for providing a chewy texture to the chewy candy or fruit chew, **characterised in that** the gelatinizing agent consists of a gliadin-enriched wheat gluten fraction having a gliadin content of at least 50 % on dry basis, and the chewy candy or fruit chew comprises a fat traction which represents between 3 and 10 % of the weight of the chewy candy or fruit chew.

2. Chewy candy or fruit chew according to claim 1, **characterised in that** the fat material is selected among animal and/or vegetable fats.

3. Chewy candy or fruit chew according to claim 2, **characterised in that** in case of vegetable fat hydrogenated palm kern oil and/or hydrogenated coconut oil is used.

4. Chewy candy or fruit chew according to any one of claims 1 to 3, **characterised in that** the chewy candy or fruit chew comprises between 0,2 and 5 % w/w of a gliadin-enriched wheat gluten fraction.

5. Chewy candy or fruit chew according to claim 4, **characterised in that** the chewy candy or fruit chew comprises between 0,5 and 3 % w/w of a gliadin-enriched wheat gluten fraction.

6. Chewy candy or fruit chew according to claim 5, **characterised in that** the chewy candy or fruit chew comprises between 0,5 and 2 % w/w of a gliadin-enriched wheat gluten fraction.

7. Chewy candy or fruit chew according to any one of claims 1 to 6, **characterised in that** the gliadin-enriched wheat gluten fraction shows a gliadin/glutenin ratio of at least 2,5:1.

8. Chewy candy or fruit chew according to claim 7, **characterised in that** the gliadin-enriched wheat gluten fraction shows a gliadin/glutenin ratio of at least 3:1.

9. Chewy candy or fruit chew according to any one of claims 1 to 8, **characterised in that** the chewy candy or fruit chew comprises one or more
- emulsifiers such as lecithin and/or glycerol mono-stearate;
- flavouring agents;
- colouring agents; and
- food acids.

10. Chewy candy or fruit chew according to any one of claims 1 to 9, **characterised in that** the chewy candy or fruit chew is a sugar-based chewy candy or fruit chew.

11. Chewy candy or fruit chew according to any one of claims 1 to 9, **characterised in that** the chewy candy or fruit chew is a sugar-free chewy candy or fruit chew.

12. Method for preparing a chewy candy or fruit chew according to any one of claims 1 to 11, **characterised in that** the method comprises the steps of
a) dispersing the gliadin-enriched wheat gluten fraction in warm water;
b) cooking up glucose syrup, sucrose and water at 120 - 140 °C, until moisture content of the mass is < 10 %, preferably between 4 and 7 %;
c) adding the fat material and the one or more emulsifiers to the cooked-up syrup, during or after cooking;
d) cooling the mixture of b) and c) to below 105 °C;
e) mixing the syrup of d) with a) and the other ingredients;
f) further cooling this mass;
g) and bringing the cooled mass into the desired shape.

13. Method according to claim 12, **characterised in that** the cooling step f) comprises pouring the mass on a cooling table where the mass is tempered by folding.

14. Method according to claim 13, **characterised in that** during folding, some fondant or icing sugar is added.

## Patentansprüche

1. Kaubonbon oder Fruchtkaumasse, in Form
- eines zuckerbasierten Kaubonbons oder einer solchen Fruchtkaumasse mit einer Grundmasse, die sich aus einer. Kombination zweier oder mehrerer Bestandteile zusammensetzt, die aus Glucosesirupen, invertierten Sirupen, Fructosesirupen sowie Saccharose, Dextrose oder Fructose gewählt sind, oder
- eines zuckerfreien Kaubonbons oder einer solchen Fruchtkaumasse mit einer Grundmasse, die sich aus einer Kombination zweier oder mehrerer Bestandteile zusammensetzt, die aus hydrierten Stärkehydrolysaten, Sorbit, Maltit, Isomaltit, Xylit, Lactit, Erythrit, Mannit, Trehalose, Tagatose und Polydextrose gewählt sind;
umfassend ein Geliermittel, das dazu dient, dem Kaubonbon oder der Fruchtkaumasse eine kaufähige Textur zu verleihen, **dadurch gekennzeichnet, dass** das Geliermittel aus einer Gliadin-angereicherten Weizenkleberfraktion besteht, die einen Gliadingehalt von mindestens 50 % in der Trockenmasse aufweist, und das Kaubonbon oder die Fruchtkaumasse eine Fettfraktion umfasst, die 3 bis 10 % des Gewichts des Kaubonbons oder der Fruchtkaumasse ausmachen.

2. Kaubonbon oder Fruchtkaumasse gemäß Anspruch 1, **dadurch gekennzeichnet, dass** das Fettmaterial aus tierischen und/oder pflanzlichen Fetten gewählt ist.

3. Kaubonbon oder Fruchtkaumasse nach Anspruch 2, **dadurch gekennzeichnet, dass** im Falle pflanzlichen Fettes hydriertes Palmkernöl und/oder hydriertes Kokosöl verwendet wird.

4. Kaubonbon oder Fruchtkaumasse nach einem der Ansprüche 1 bis 3, **dadurch gekennzeichnet, dass** das Kaubonbon oder die Fruchtkaumasse 0,2 bis 5 % (w/w) einer Gliadin-angereicherten Weizenkleberfraktion umfasst.

5. Kaubonbon oder Fruchtkaumasse nach Anspruch 4, **dadurch gekennzeichnet, dass** das Kaubonbon oder die Fruchtkaumasse 0,5 bis 3 % (w/w) einer Gliadin-angereicherten Weizenkleberfraktion umfasst.

6. Kaubonbon oder Fruchtkaumasse nach Anspruch 5, **dadurch gekennzeichnet, dass** das Kaubonbon oder die Fruchtkaumasse 0,5 bis 2 % (w/w) einer Gliadin-angereicherten Weizenkleberfraktion umfasst.

7. Kaubonbon oder Fruchtkaumasse nach einem der Ansprüche 1 bis 6, **dadurch gekennzeichnet, dass** die Gliadin-angereicherte Weizenkleberfraktion ein Gliadin/Glutenin-Verhältnis von mindestens 2,5:1 aufweist.

8. Kaubonbon oder Fruchtkaumasse nach Anspruch 7, **dadurch gekennzeichnet, dass** die Gliadin-angereicherte Weizenkleberfraktion ein Gliadin/Glutenin-Verhältnis von mindestens 3:1 aufweist.

9. Kaubonbon oder Fruchtkaumasse nach einem der Ansprüche 1 bis 8, **dadurch gekennzeichnet, dass** das Kaubonbon oder die Fruchtkaumasse einen oder mehrere der folgenden Bestandteile umfasst:
- Emulgatoren wie etwa Lecithin und/oder Glycerin-Monostearat;
- Geschmacksstoffe;
- Farbstoffe; und
- Speisesäuren.

10. Kaubonbon oder Fruchtkaumasse nach einem der Ansprüche 1 bis 9, **dadurch gekennzeichnet, dass** das Kaubonbon oder die Fruchtkaumasse ein zuckerbasiertes Kaubonbon oder eine solche Fruchtkaumasse ist.

11. Kaubonbon oder Fruchtkaumasse nach einem der Ansprüche 1 bis 9, **dadurch gekennzeichnet, dass** das Kaubonbon oder die Fruchtkaumasse ein zuckerfreies Kaubonbon oder eine solche Fruchtkaumasse ist.

12. Verfahren zur Herstellung eines Kaubonbons oder einer Fruchtkaumasse nach einem der Ansprüche 1 bis 11, **dadurch gekennzeichnet, dass** das Verfahren die folgenden Schritte umfasst:
a) Dispergieren der Gliadin-angereicherten Weizenkleberfraktion in warmem Wasser;
b) Aufkochen von Glucosesirup, Saccharose und Wasser bei 120 bis 140°C, bis der Feuchtigkeitsgehalt der Masse < 10 %, vorzugsweise 4 bis 7 %, beträgt;
c) Hinzufügen des Fettmaterials und des einen oder mehrerer Emulgatoren zum aufgekochten Sirup, während oder nach dem Kochen;
d) Abkühlen der Mischung von b) und c) auf unter 105°C;
e) Mischen des Sirups von d) und der weiteren Bestandteile;
f) weiteres Abkühlen dieser Masse;
g) und Informbringen der abgekühlten Masse gemäß den jeweiligen Wünschen.

13. Verfahren nach Anspruch 12, **dadurch gekennzeichnet, dass** die Masse im Rahmen der Abkühlschrittes f) auf einen Kühltisch gegossen wird, auf welchem die Masse durch einen Faltvorgang auf die angestrebte Temperatur gebracht wird.

14. Verfahren nach Anspruch 13, **dadurch gekennzeichnet, dass** während des Faltvorgangs etwas Zuckerglasur oder Zuckerguss hinzugefügt wird.

## Revendications

1. Bonbon tendre ou pâte à mâcher aux fruits se présentant sous la forme :
- d'un bonbon tendre ou d'une pâte à mâcher aux fruits à base de sucre ayant une masse volumineuse qui se compose d'une combinaison de deux ingrédients ou plus sélectionnés parmi les sirops de glucose, les sirops invertis, les sirops de fructose et le saccharose, le dextrose ou le fructose, ou
- d'un bonbon tendre ou d'une pâte à mâcher aux fruits sans sucre ayant une masse volumineuse qui se compose d'une combinaison de deux ingrédients ou plus sélectionnés parmi les hydrolysats d'amidon hydrogéné, le sorbitol, le maltitol, l'isomaltitol, le xylitol, le lactitol, l'érythritol, le mannitol, le tréhalose, le tagatose et le polydextrose ;
comprenant un agent gélifiant destiné à conférer une texture souple au bonbon tendre ou à la pâte à mâcher aux fruits, **caractérisé en ce que** l'agent gélifiant consiste en une fraction de gluten de blé enrichie en gliadine ayant une teneur en gliadine d'au moins 50 % sur une base sèche, et le bonbon tendre ou la pâte à mâcher aux fruits comprend une fraction de graisses qui représente 3 à 10 % du poids du bonbon tendre ou de la pâte à mâcher aux fruits.

2. Bonbon tendre ou pâte à mâcher aux fruits selon la revendication 1, **caractérisé en ce que** la matière grasse est sélectionnée parmi les graisses animales et/ou végétales.

3. Bonbon tendre ou pâte à mâcher aux fruits selon la revendication 2, **caractérisé en ce que** l'on utilise, dans le cas d'une graisse végétale, de l'huile de noix de palme hydrogénée et/ou de l'huile de noix de coco hydrogénée.

4. Bonbon tendre ou pâte à mâcher aux fruits selon l'une quelconque des revendications 1 à 3, **caractérisé en ce que** le bonbon tendre ou la pâte à mâcher aux fruits comprend entre 0,2 et 5 % p/p d'une fraction de gluten de blé enrichie en gliadine.

5. Bonbon tendre ou pâte à mâcher aux fruits selon la revendication 4, **caractérisé en ce que** le bonbon tendre ou la pâte à mâcher aux fruits comprend entre 0,5 et 3 % p/p d'une fraction de gluten de blé enrichie en gliadine.

6. Bonbon tendre ou pâte à mâcher aux fruits selon la revendication 5, **caractérisé en ce que** le bonbon tendre ou la pâte à mâcher aux fruits comprend entre 0,5 et 2 % p/p d'une fraction de gluten de blé enrichie en gliadine.

7. Bonbon tendre ou pâte à mâcher aux fruits selon l'une quelconque des revendications 1 to 6, **caractérisé en ce que** la fraction de gluten de blé enrichie en gliadine présente un rapport de gliadine/gluténine d'au moins 2,5:1.

8. Bonbon tendre ou pâte à mâcher aux fruits selon la revendication 7, **caractérisé en ce que** la fraction de gluten de blé enrichie en gliadine présente un rapport de gliadine/gluténine d'au moins 3:1.

9. Bonbon tendre ou pâte à mâcher aux fruits selon l'une quelconque des revendications 1 à 8, **caractérisé en ce que** le bonbon tendre ou la pâte à mâcher aux fruits comprend un ou plusieurs :
- agents émulsifiants, tels que la lécithine et/ou le mono-stéarate de glycérol ;
- agents aromatisants ;
- agents colorants ; et
- acides alimentaires.

10. Bonbon tendre ou pâte à mâcher aux fruits selon l'une quelconque des revendications 1 à 9, **caractérisé en ce que** le bonbon tendre ou la pâte à mâcher aux fruits est un bonbon tendre ou une pâte à mâcher aux fruits à base de sucre.

11. Bonbon tendre ou pâte à mâcher aux fruits selon l'une quelconque des revendications 1 à 9, **caractérisé en ce que** le bonbon tendre ou la pâte à mâcher aux fruits est un bonbon tendre ou une pâte à mâcher aux fruits sans sucre.

12. Procédé de préparation d'un bonbon tendre ou d'une pâte à mâcher aux fruits selon l'une quelconque des revendications 1 à 11, **caractérisé en ce que** le procédé comprend les étapes consistant à :
a) disperser la fraction de gluten de blé enrichie en gliadine dans de l'eau chaude ;
b) faire cuire du sirop de glucose, du saccharose et de l'eau à une température de 120 à 140 °C jusqu'à ce que la teneur en humidité de la masse atteigne une valeur < 10 %, de préférence, de 4 à 7 % ;
c) ajouter la matière grasse et un ou plusieurs agents émulsifiants au sirop cuit, pendant ou après la cuisson ;
d) refroidir le mélange obtenu au point b) et au point c) à une température inférieure à 105 °C ;
e) mélanger le sirop obtenu au point d) à celui obtenu au point a) et aux autres ingrédients ;
f) refroidir encore cette masse ;
g) et conférer à la masse refroidie la forme souhaitée.

13. Procédé selon la revendication 12, **caractérisé en ce que** l'étape de refroidissement f) comprend l'étape consistant à verser la masse sur une table de refroidissement où la masse est tempérée par pliage.

14. Procédé selon la revendication 13, **caractérisé en ce que** l'on ajoute, pendant le pliage, du sucre fondant ou du sucre glace.
